Europäisches Patentamt

(19) European Patent Office

Office européen des brevets

(11) **EP 0 808 570 A1**

(12) **EUROPEAN PATENT APPLICATION**
published in accordance with Art. 158(3) EPC

(43) Date of publication:
26.11.1997 Bulletin 1997/48

(21) Application number: 96901528.8

(22) Date of filing: 02.02.1996

(51) Int. Cl.$^6$: **A01N 59/16**, C03C 8/00

(86) International application number:
PCT/JP96/00221

(87) International publication number:
WO 96/23412 (08.08.1996 Gazette 1996/36)

(84) Designated Contracting States:
DE FR

(30) Priority: 02.02.1995 JP 15948/95
20.02.1995 JP 30641/95

(71) Applicant: TOTO LTD.
Kitakyushu-shi Fukuoka 802 (JP)

(72) Inventors:
• ADACHI, Nobuo
Kita-kyusyu-shi Fukuoka 802 (JP)
• SHIGA, Masahiro
Kita-kyusyu-shi Fukuoka 802 (JP)
• UENO, Toru
Kita-kyusyu-shi Fukuoka 802 (JP)
• HORIUCHI, Satoshi
Kita-kyusyu-shi Fukuoka 802 (JP)
• MACHIDA, Mitsuyoshi
Kita-kyusyu-shi Fukuoka 802 (JP)

(74) Representative:
Weiss, Wolfgang, Dipl.-Chem. Dr. et al
Patentanwälte
Weickmann & Partner,
Kopernikusstrasse 9
81679 München (DE)

(54) **PROCESS FOR PRODUCING ANTIBACTERIAL GLAZE, ANTIBACTERIAL MEMBER, AND PROCESS FOR PRODUCING THE MEMBER**

(57)    In order to provide antimicrobial members excellent in both durability and antimicrobial properties, an antimicrobial glaze is prepared in the following manner: first a base glaze which is a constituent of a glaze layer formed on the surface of said members is prepared by way of mixing/grinding water, glaze base materials and pigment, secondly a heat resistant powder material with an antimicrobial metal on it is mixed in the above base glaze, and finally a binder is mixed in the above mixture. As for the antimicrobial metal carried on a heat resistant powder material, its percentage to the heat resistant powder material is preferably within the range of 0.5 weight % to 25 weight %. As for the heat resistant powder material with an antimicrobial metal on it, its percentage to the total weight of a dried glaze is preferably within the range of 0.5 weight % to 10 weight %.

F I G. 1

EP 0 808 570 A1

## Description

<u>Technical Field</u>

This invention relates to the method of preparing an antimicrobial glaze capable of providing ceramic, enamel or tile for, for example, sanitary ware with antimicrobial property, to antimicrobial member produced using said antimicrobial glaze, and to the process of producing said antimicrobial member.

<u>Background Art</u>

Generally, ceramic such as sanitary ware, for example a toilet, a washbowl and a bidet, or tile has its surface undergone glazing because glazing provides it with a beautiful appearance of various colors, and in addition, with sanitary functions by forming a close and water repellent smooth layer (a glazed layer). In recent years, glazing has been performed to provide a glaze layer of the surface of ceramic with antimicrobial property (including fungicidal and antifouling property) in addition to above-mentioned functions. One of the potentially possible methods of providing a glaze layer with antimicrobial property is to apply antimicrobial agent to the surface of the glaze layer. However, antimicrobial agent thus applied is poor in durability and easily peels. Therefore generally antimicrobial agent is mixed in a glaze prior to glazing and firing.

Generally, a glaze is prepared by mixing water, glaze base material (a portion vitrified via firing), pigment and binder and has a high viscosity. The high viscosity prevents antimicrobial agent from uniformly dispersing in the glaze. Thus durability is not compatible with antimicrobial property.

In addition, when antimicrobial agent is mixed and ground in a glaze as it is, in the process of grinding the glaze raw materials the antimicrobial agent itself is ground, which leads to deterioration of antimicrobial effect. Furthermore when antimicrobial agent is mixed in a glaze, there arises another problem that color of the glaze produced after firing (firing color) is different from the expected one. Specifically, when a glaze to which antimicrobial agent is added undergoes firing, some antimicrobial agent is left and dispersed in matrix phase formed by vitrification of glaze base material. In this case, antimicrobial agent left unfused shows emulsifying effect and some of antimicrobial agent is fused into the glaze, which causes production of firing color different from that of a glaze to which no antimicrobial agent is added. In many cases, addition of antimicrobial agent is apt to produce whitish firing color.

In order to produce the same firing color whether antimicrobial agent is added or not, in grinding and mixing glaze raw materials, the composition and amount of pigment to be added should be differently prepared depending on whether antimicrobial agent is added or not. This means a significant decrease in productivity because for whatever glaze, two types of glaze having different mixing ratio (i.e. those with and without antimicrobial agent) should be prepared.

On the other hand, in Japanese Patent Application Laid-Open No. 4-234303 there is disclosed a prior art which provides ceramic powder itself with antimicrobial property.

The prior art allows the surface of ceramics to carry antimicrobial metal by putting the ceramics such as calcium phosphate, calcium hydrogenphosphate, calcium carbonate, calcium silicate or hydroxyapatite into an aquaous solution containing a water-soluble salt of antimicrobial metal and subsequently heating it. According to the prior art, the percentage of the antimicrobial metal to the ceramics is 0.01 weight % to 20 weight %.

And in Japanese Patent Application Laid-Open No. 5-201747 there is disclosed another prior art which provides a glaze layer with antimicrobial property by allowing ceramic powder to carry antimicrobial metal in the same manner as the above-mentioned prior art and subsequently mixing the ceramic powder with antimicrobial metal on it into the glaze.

According to the prior art, hydroxyapatite with antimicrobial metal on it is mixed into a glaze. The percentage of the antimicrobial metal to the hydroxyapatite is 10 % or less, and preferably 0.001 % to 5 %.

Ceramic powder with antimicrobial metal on it itself can exhibit sufficient antimicrobial property even if the percentage of the antimicrobial metal to the ceramic powder is about 0.01 weight %, because its surface is in contact with the air. However, in the case where antimicrobial property is provided to a glaze layer on the surface of sanitary ware, enamel, tile or the like by way of mixing such ceramic powder with antimicrobial metal on it as disclosed in Japanese Patent Application Laid-Open No. 4-234303 into a glaze, most of the ceramic powder is buried in the glaze and consequently cannot exhibit as much antimicrobial property as expected.

Furthermore, the mixing amount of antimicrobial metal as disclosed in Japanese Patent Application Laid-Open No. 5-201747 is not enough to exhibit the expected antimicrobial property.

Then another potentially possible method to provide a glaze layer with sufficient antimicrobial property may be that a large amount of ceramic powder with antimicrobial metal on it is mixed in a glaze. However, this makes the glaze layer less lustrous and changes the glaze characteristics to prevent the glaze from sufficiently fusing.

When silver is employed as an antimicrobial metal, the amount to be used to exhibit antimicrobial property is about one tenth as much as that of other metals, such as copper and zinc. Still, when the amount exceeding a certain level is added to a glaze, it produces brown or black firing color, which leads to deterioration of the glaze layer's value.

Disclosure of Invention

In view of the foregoing difficulties, it is an object of the present invention to provide a glaze having antimicrobial property, and as a result, to provide antimicrobial property as well as durability for the surface of ceramic and enameled products.

The method of preparing an antimicrobial glaze used for ceramic according to the present invention basically comprises the steps of:

preparing a base glaze by way of mixing/grinding water, glaze base material and pigment,
mixing heat resistant powder material with an antimicrobial metal on it in said base glaze, and
mixing binder in said mixture.

Firing color of a glaze varies with whether an antimicrobial agent is added to the glaze or not. In order to improve and prevent this situation, the method of preparing an antimicrobial glaze used for ceramic according to the present invention may alternatively comprise the steps of:

preparing a base glaze by way of mixing/grinding water, glaze base material and pigment,
mixing heat resistant powder material with an antimicrobial metal on it as well as pigment capable of counterbalancing the change in firing color caused by the addition of said heat resistant powder material in said base glaze, and
mixing binder in said mixture.

Preferably average particle diameter of the said heat resistant powder material is within the range of 1 $\mu$m to 15 $\mu$m. Preferably the percentage of said antimicrobial metal to said heat resistant powder material is within the range of 0.5 weight % to 25 weight %. And preferably the percentage of said heat resistant powder material with an antimicrobial metal on it to the total weight of a dried glaze is within the range of 0.5 weight % to 10 weight %.

The process of producing antimicrobial member according to the present invention comprises the steps of:

applying the antimicrobial glaze used for ceramic obtained by the foregoing method to groundwork of ceramic, and
firing it.

Prior to applying the antimicrobial glaze for ceramic to the groundwork of ceramic, the foregoing base glaze to which said heat resistant powder material with antimicrobial metal on it is not added yet may be applied to the groundwork of ceramic.

More particularly, for the antimicrobial member according to the present invention, silver is used as an antimicrobial metal and ceramic powder is used as a heat resistant powder material. The antimicrobial member thus produced has ceramic powder with silver on it in their glaze layer. The percentage of the silver to the total weight of said silver and said ceramic powder is 10 weight % or more, and the percentage of said silver to the glaze layer is less than 1 weight %.

Brief Description of Drawings

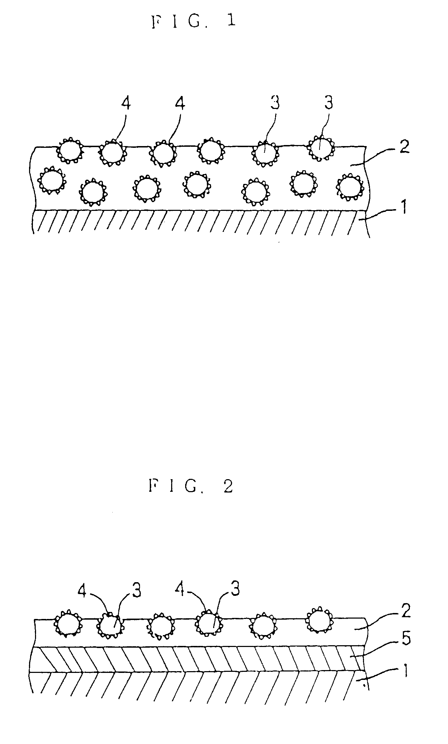

Figure 1 is a schematic expanded sectional view showing a surface layer of the antimicrobial member according to the example 1 of the present invention, Figure 2 is a schematic expanded sectional view showing a surface layer of the double-glazed antimicrobial member according to the example 2 of the present invention.

Best Mode for Carrying out the Invention

In the following, the method of preparing antimicrobial glaze according to the present invention, the antimicrobial member produced using said antimicrobial glaze and the process of preparing thereof will be explained particularly.

The method of preparing antimicrobial glaze for ceramic and the like according to the present invention basically comprises the steps of:

preparing a base glaze by mixing/grinding water, glaze base material and pigment,
mixing heat resistant powder material with an antimicrobial metal on it in said base glaze, and
mixing binder in said mixture.

Metals exhibiting oligodynamic effect such as silver, copper and zinc are used as an antimicrobial metal, and silver is excellent in antimicrobial activity.

As a heat resistant powder material, since it is required not to be fully decomposed and fused at firing temperature of ceramic, calcium phosphate-based compounds such as hydroxyapatite and sintered products of calcium phosphate-based compounds and flux such as feldspars are used.

As a glaze, those which are well-known as a glaze for ceramic may be employed. Although the main constituent of a glaze is glaze base material which is vitrified via firing, as a glaze base material, both frit (a frit glaze) which is already vitrified and raw material (a raw glaze) which is vitrified via firing may be employed. As a raw material, for example in the case of sanitary ware, silica sand, alumina, clays, feldspars, limes, wallastonite, zinc white, dolomite and the like are used.

Examples of glaze materials other than a glaze base material include various pigments used for producing color and opacifiers such as zircon and tin oxide which are mixed in the glaze if necessary.

Examples of binder include carboxyl methyl, cellulose sodium salt, methyl cellulose, various natural rubbers, poly(vinyl alcohol) and the like. If necessary, peptizer, flocculent, anti-septic agent and the like may be added.

When mixing heat resistant powder material with antimicrobial metal on it in a base glaze, water may be added so that it may control temperature increase.

In an industrial glazing process, a considerable part of the glaze used does not adhere to works and is recovered. The recovered glaze is mixed with newly prepared glaze (a new glaze) to be reused. In this case, the recovered glaze has a higher viscosity because it contains binder, therefore heat resistant powder material with antimicrobial metal on it is preferably mixed in a new glaze.

Heat resistant powder material with antimicrobial metal on it is not necessarily mixed directly in a base glaze. It may be mixed in a portion of the base glaze previously taken out and subsequently the mixture may be returned to the base glaze.

The foregoing method of preparing a base glaze can be partly changed. In particular, it is possible to first prepare a base glaze by mixing/grinding water, glaze base material and pigment; secondly mix heat resistant powder material with an antimicrobial metal on it as well as pigment capable of counterbalancing the change in firing color caused by the addition of said heat resistant powder material in said base glaze; and mix binder in said mixture.

Pigment added to the base glaze so as to change the firing color can be the same one that is already comprised in the base glaze. Preferably the percentage of pigment mixed when preparing a base glaze makes up 70 % or more of its total amount mixed in the glaze used for ceramic. If the percentage is less than 70 %, uniform dispersion of pigment which is added afterward is likely to be disturbed.

The foregoing method of preparing a base glaze can be partly changed. In particular, it is possible to first take out a part of the above base glaze, secondly mix heat resistant powder material with antimicrobial metal on it as well as pigment capable of counterbalancing the change in firing color caused by the addition of said heat resistant powder material in said base glaze previously taken out, and return the mixture to the rest of the base glaze.

Preferably the average diameter of the above heat resistant powder material is within the range of 1 $\mu$m to 15 $\mu$m. If it is less than 1 $\mu$m, the particles easily aggregate and it is hard for them to disperse in the uniform manner. If it is more than 15 $\mu$m, sufficient antimicrobial property cannot be expected.

Preferably the percentage of the foregoing antimicrobial metal to heat resistant powder material is within the range of 0.5 weight % to 25 weight %. If it is less than 0.5 weight %, sufficient antimicrobial property cannot be obtained. If it is more than 25 weight %, it is hard for heat resistant powder material to carry the antimicrobial metal. And preferably the weight percentage of the heat resistant powder material with the above antimicrobial metal on it to the total weight of a dried glaze is within the range of 0.5 weight % to 10 weight %. If it is less than 0.5 weight %, sufficient antimicrobial property cannot be obtained. If it is more than 10 weight %, the glaze has too high a viscosity when undergoing firing, which leads to a poor glazed surface.

The process of producing antimicrobial member for according to the present invention comprises the steps of:

applying the antimicrobial glaze obtained by the foregoing method to, for example, groundwork of ceramic, and firing it.

The foregoing process of producing antimicrobial member can be partly changed. In particular, they can be produced by first preparing a base glaze by mixing/grinding water, glaze base material and pigment, secondly applying the mixture of the base glaze and binder to groundwork of ceramic, then applying the antimicrobial glaze for ceramic obtained by the foregoing method to the layer of the above mixture, and finally fire it.

The antimicrobial member or antimicrobial ceramic thus obtained have a glaze layer consisting of a base glaze layer as a lower layer and an antimicrobial glaze layer as an upper layer; wherein the base glaze layer consists of a base glaze which is a mixture of water, glaze base material and pigment, and the antimicrobial glaze layer consists of an antimicrobial glaze which is a mixture of a base glaze, heat resistant powder material with antimicrobial metal on it and pigment capable of counterbalancing the change in firing color caused by the addition of said heat resistant powder material.

Now the foregoing method of preparing antimicrobial glaze, antimicrobial member produced using said antimicrobial glaze and process of producing thereof according to the present invention are described by way of example 1 with reference to the accompanying drawings.

Figure 1 is a schematic expanded sectional view of the surface layer of the antimicrobial member according to example 1 of the present invention, wherein said antimicrobial member consists of substrate 1, a glaze layer 2 formed on said substrate 1, heat resistant powder material 3 comprised in said glaze layer 2 and antimicrobial metal 4 as an antimicrobial agent carried on the surface of said heat resistant powder material 3.

In Figure 2, there is shown a ceramic produced with double-glazing, wherein said ceramic consists of substrate 1, a normal glaze layer 5 formed on said substrate 1 which does not exhibit antimicrobial activity, and a glaze layer 2 formed on said glaze layer 5 in which heat resistant powder material 3 with antimicrobial metal 4 on it is mixed.

In order to prepare such a glaze as forms glaze layers 2 and 5, first a base glaze is prepared by grinding the mixture of water, glaze base material, most of the pigment to be used, and if necessary emulsifying agent to the desired particle size using a cylinder grind, pot grind, vibrating grind or the like. Then an antimicrobial agent (heat resistant powder material with antimicrobial metal on it) and the rest of the pigment are mixed in the above base glaze. When expected firing color is whitish, the firing color obtained is hardly different from the expected one even if heat resistant powder material with antimicrobial metal on it is added; therefore all the pigment may be added when preparing a base glaze.

As a mixing apparatus, a homogenizer, blunger or high speed agitator are used in addition to the grinds used for preparing the above base glaze.

Then binder is mixed in the base glaze to produce an antimicrobial glaze for ceramic. In this process various agitators can be used, and if a lot is small, a portable mixer is sufficient.

The antimicrobial glaze for ceramic obtained in the foregoing manner is applied to, for example, the groundwork of sanitary ware which is dried after molding. For application of the glaze, spraying, dipping, brushing and the like are used.

As a glazing process, both single layer glazing and double layer glazing may be employed. The advantage of employing double layer glazing is that, although it takes much time, when the antimicrobial metal used is very expensive, the process can reduce the amount of its use.

Finally the glazed groundwork is fired. Preferably the firing conditions (such as heat curve and firing atmosphere) are the same as those of the conventional products to which a glaze containing no antimicrobial agent is applied, because it allows a consolidated firing in the same kiln. In order to realize this, it is necessary to adjust the foregoing firing color of the glaze containing an antimicrobial agent to that of the glaze containing no antimicrobial agent (the same firing conditions are a precondition for the same firing color), and in addition it would be better to adjust its viscosity (flowability) in firing.

Now the experimental examples 1 to 3 are described in detail. Table 1 shows the components of glaze base material and antimicrobial agent (heat resistant powder material carrying antimicrobial metal) used for experiments 1 to 3. As a pigment, metal oxide compounds such as ordinary iron oxide and tin oxide were used. And as a binder, popular carboxymethyl cellulose (CMC) was used.

[Table 1]

| | Glaze Base Material (Weight %) | Antimicrobial Agent (Weight %) |
|---|---|---|
| $SiO_2$ | 55 - 80 | 20 - 60 |
| $Al_2O_3$ | 5 - 13 | 5 - 20 |
| $Fe_2Oe$ | 0.1 - 0.4 | 0 - 5 |
| MgO | 0.8 - 3.0 | 0 - 5 |
| CaO | 8 - 17 | 10 - 40 |
| ZnO | 3 - 8 | 0 - 5 |
| $K_2O$ | 1 - 4 | 0.1 - 4.0 |
| $Na_2O$ | 0.5 - 2.5 | 0.1 - 2.0 |
| $P_2O_5$ | - | 10 - 30 |
| Ag | - | 0.1 - 30 |

(Experiment 1)

| A. Preparation of Base Glaze | |
|---|---|
| Glaze base material | 100 part |
| $ZrO_2$ | 7 part ($ZrO_2$ is added to adjust emulsification of a glaze) |
| Red pigment | 1.5 part |
| Blue pigment | 0.3 part |
| Yellow pigment | 0.3 part |
| **B. Preparation of Glaze Containing Antimicrobial Agent** | |
| Base glaze | 100 part |
| Red pigment | 1.0 part |
| Blue pigment | 0.2 part |
| Yellow pigment | 0.3 part |
| Antimicrobial agent | 3 part |

(Experiment 2)

| A. Preparation of Base Glaze | |
|---|---|
| Glaze base material | 100 part |
| Blue pigment | 5 part |
| Green pigment | 1.5 part |
| **B. Preparation of Glaze Containing Antimicrobial Agent** | |
| Base glaze | 100 part |
| Blue pigment | 1.0 part |
| Green pigment | 0.1 part |
| Black pigment | 0.5 part |
| Antimicrobial agent | 2 part |

(Experiment 3)

| A. Preparation of Base Glaze | |
|---|---|
| Glaze base material | 100 part |
| $ZrO_2$ | 5 part ($ZrO_2$ is added to adjust emulsification of a glaze) |
| Gray pigment | 3 part |
| Red pigment | 1 part |
| Blue pigment | 0.5 part |
| B. Preparation of Glaze Containing Antimicrobial Agent | |
| Base glaze | 100 part |
| Antimicrobial agent | 1 part |

To each of the base glazes and the glazes containing antimicrobial agent prepared in experimental examples 1 to 3 binder was added, after which the glazes were applied to the surface of sanitary ware and subsequently the ware was fired. Then color of each and every fired ware was observed visually and using a colorimetric apparatus.

No difference in the color of each fired ware was noticed visually. And the difference between color values ($\Delta E^*_{ab}$) obtained from measurement using a colorimetric apparatus was small and not worth serious consideration.

Table 2 shows the results of colorimetric measurement using a colorimetric apparatus. The values were obtained using (CIE1976)L*, a*, b* chrominance of JIS Z8105 (No. 2070);

where L* : psychometric lightness,

a*, b* : psychometric chroma coordinates (two coordinates expressing the position on the same lightness surface in a unifrom color space), and

$\Delta E^*_{ab}$: chrominance between two color stimulus defined in terms of $\Delta L^*$, $\Delta a^*$ and $\Delta b^*$ which are differences in L*, a*, b* coordinates in a L*, a*, b* color system

$$\Delta E^*_{ab} = [(\Delta L^*)^2 + (\Delta a^*)^2 + (\Delta b^*)2]^{1/2}$$

[Table 2]

| | | L* | a* | b* | $\Delta E^*_{ab}$ |
|---|---|---|---|---|---|
| Experiment 1 | Preparation of Base Glaze | 74.78 | 6.10 | 5.40 | 0.34 |
| | Preparation of Glaze Containing Antimicrobial Agent | 75.00 | 6.20 | 5.64 | |
| Experiment 2 | Preparation of Base Glaze | 30.34 | -2.26 | -10.22 | 0.47 |
| | Preparation of Glaze Containing Antimicrobial Agent | 30.01 | -2.40 | -10.53 | |
| Experiment 3 | Preparation of Base Glaze | 51.24 | -0.70 | 0.45 | 0.23 |
| | Preparation of Glaze Containing Antimicrobial Agent | 51.40 | -0.64 | 0.30 | |

Table 3 below shows the results of antimicrobial evaluation of ceramic produced using the antimicrobial glaze for ceramic of Example 1. Here antimicrobial evaluations were performed using E coli (Escherichi a coli W3110 strain). First the glazed surface of each sample was sterilized with 70 % ethanol, then 0.15 ml (10,000 to 15,000 CFU) of the E coli solution was dropped on the above sterilized surface, after which a glass plate (100 × 100 mm) was put on the glazed surface so as to adhere to it and allowed to stand for 3 hours. After that the E coli solution on each sample was wiped with sterilized gauze and collected in 10 ml of physiological saline. The survival rate of E coli was calculated in each case and the values were used as an index of the evaluation. The evaluation criteria are as follows:

+++ :     Survival rate of E coli is less than 10 %.
++ :      Survival rate of E coli is within the range of 10 % to less than 30 %.
+ :       Survival rate of E coli is within the range of 30 % to less than 70 %.
- :       Survival rate of E coli is 70 % or more.

[Table 3]

| Samples of Glaze Containing Antimicrobial Agent | Antimicrobial Property |
|---|---|
| Experiment 1 | +++ |
| Experiment 2 | +++ |
| Experiment 3 | ++ |

As is described above, according to the present invention, binder is not added during the process of preparing a base glaze for antimicrobial glaze, but is mixed after heat resistant powder material with antimicrobial metal on it is mixed in the base glaze. This means that antimicrobial agent is mixed in a base glaze having a low viscosity, therefore it is allowed to uniformly disperse. Thus in the present invention antimicrobial property is compatible with durability.

Furthermore, according to the present invention, antimicrobial metal is not mixed in the base glaze as it is, but is mixed with heat resistant powder material carrying it. This prevents antimicrobial agent itself from being ground, and permits its antimicrobial effect to increase.

In addition, according to the present invention, when heat resistant powder material is mixed in a base glaze, pigment capable of counterbalancing the change in firing color caused by the addition of heat resistant powder material is also mixed in it. This makes it possible to produce the same firing color whether or not antimicrobial agent is mixed in the base glaze.

Furthermore, according to the present invention, heat resistant powder material with antimicrobial metal on it as well as pigment capable of counterbalancing the change in firing color caused by the addition of heat resistant powder material may be mixed in a part of the base glaze previously taken out, and the mixture may be returned to the rest of the base glaze. This means that a large scale mixing apparatus is unnecessary, because the amount of the base glaze in which heat resistant powder material carrying antimicrobial metal and pigment are mixed is small.

Now the method of preparing antimicrobial glaze, antimicrobial members produced using said glaze and the process of producing thereof of Example 2 of the present invention is described in detail with reference to the following experimental examples.

In Example 2 of the present invention, silver was used as an antimicrobial agent, and ceramic powder was used as a heat resistant material. The antimicrobial members of Example 2 had a glaze layer formed on their surface, and to the glaze layer ceramic powder with silver was added. Here the percentage of the silver to the glaze layer was 10 weight % or more, and the percentage of the silver to the glaze layer was less than 1 weight %.

The material of the above members can be optionally selected from among the group of china and porcelain, enamel, tile, ceramics, glass, metal and compound thereof, as far as they are heat resistant to the fusing temperature of the glaze. The above members can be not only shaped into a simple form like a globe, a column, a cylinder, a plate etc., but shaped into a complicated form like sanitary ware, a washbowl, a bidet, a washtank, a bathtub, a sink and table ware.

The above ceramic powder is selected from those having an average particle diameter of less than 10 μm. In particular, the material of the above ceramic powder can be selected from among the group of phosphate compounds such as calcium phosphate, calcium hydrogenphosphate, hydroxyapatite and ammonium phosphate; alminosilicates such as zeolite; silicates such as montmorillonite; calcium carbonate; zinc oxide and so on.

For sanitary ware, since it is fired at temperatures of 1000°C or more, preferably phosphate compounds, calcium carbonate, calcium silicate, zinc oxide and the like are employed.

In Example 2 of the present invention, a comparatively large amount of silver, which is an antimicrobial metal, is carried on the surface of ceramic powder, and the ceramic powder is mixed in a glaze. This permits the amount of antimicrobial metal added to decrease, and makes it possible to enhance the antimicrobial property of the glaze without deteriorating the other properties.

Now Example 2 of the present invention is described more particularly with reference to the following experimental examples.

## Experiment 4

Platelike test specimens having a size of 50 mm × 100 mm were made from sanitary ware groundwork slurry which was prepared with silica sand, feldspar, clay and so on. At the same time, the prescribed amount of calcium phosphate-based powder having an average particle size of 2 μm and carrying the prescribed amount of silver was added to a blue glaze, and they were mixed together in water. The mixture was applied to the above platelike test specimens, and they were fired at 1100°C to 1200°C to obtain samples. The samples thus obtained were evaluated with their antimicrobial property.

The composition of the above glaze is shown below. As a pigment, a normal metal oxide pigment was used. If necessary, as a sizing agent, the prescribed amount of carboxymethyl cellulose (CMC) can be added.

| | |
|---|---|
| $SiO_2$ | 55 to 80 weight % |
| $Al_2O_3$ | 5 to 13 weight % |
| $Fe_2O_3$ | 0.1 to 0.4 weight % |
| $MgO$ | 0.8 to 3.0 weight % |
| $CaO$ | 8 to 17 weight % |
| $ZnO$ | 3 to 8 weight % |
| $K_2O$ | 1 to 4 weight % |
| $Na_2O$ | 0.5 to 2.5 weight % |
| $ZrO_2$ | 0 to 15 weight % |
| Pigment (blue) | 1 to 20 weight % |

An example of the composition of calcium phosphate-based powder carrying silver is shown below.

| | |
|---|---|
| $SiO_2$ | 20 to 60 weight % |
| $Al_2O_3$ | 5 to 20 weight % |
| $Fe_2O_3$ | 0 to 5.0 weight % |
| $MgO$ | 0 to 5.0 weight % |
| $CaO$ | 10 to 40 weight % |
| $ZnO$ | 0 to 5.0 weight % |
| $K_2O$ | 0.1 to 4.0 weight % |
| $Na_2O$ | 0.1 to 2.0 weight % |
| $P_2O_5$ | 10 to 40 weight % |
| $Ag$ | 0.1 to 30 weight % |

Antimicrobial evaluation was performed using E coli (Escherichia coli W3110 strain). In the evaluation, first the top surface of each member was sterilized with 70 % ethanol, then 0.15 ml (10,000 to 50,000 CFU) of the E coli solution was dropped on the above surface, after which a glass plate (100 × 100) was put on the surface so as to adhere to it and allowed to stand for 3 hours. After that the E coli solution on each sample was wiped with sterilized gauze and collected in 10 ml of physiological saline. The survival rate of E coli was calculated in each case, and the values were used as an index of the evaluation. The evaluation criteria are as follows, and the evaluation results are shown in Table 4 below.

+++ :  Survival rate of E coli is less than 10 %.
++ :   Survival rate of E coli is within the range of 10 % to less than 30 %.
+ :    Survival rate of E coli is within the range of 30 % to less than 70 %.
- :    Survival rate of E coli is 70 % or more.

[Table 4]

| Amount of Silver Carried on Calcium Phosphate-based Powder (Wt %) | Amount of Calcium Phosphate-based Powder Mixed in Glaze (Wt %) | Total Amount of Silver Mixed in Glaze (Wt %) | Antimicrobial Property | Coloration |
|---|---|---|---|---|
| 5 | 3 | 0.15 | + | None |
| 5 | 5 | 0.25 | + | None |
| 10 | 2 | 0.20 | +++ | None |
| 10 | 2.5 | 0.25 | +++ | None |
| 15 | 1 | 0.15 | +++ | None |
| 15 | 2 | 0.30 | +++ | None |
| 15 | 7 | 1.05 | +++ | Observed |

It is evident from Table 4 that antimicrobial property improves with the increase of silver amount to a calcium phosphate-based powder, and that when the amount of silver carried on calcium phosphate-based powder is 10 weight % or more, the antimicrobial property is evaluated as +++. It is also found that when the percentage of the total silver to the glaze is more than 1 weight %, the original color of the glaze can not be produced.

The following two reasons are given for the improvement of antimicrobial property with the increase of silver amount to a calcium phosphate-based powder.

One reason is that when the foregoing method is employed where glaze and calcium phosphate-based powder are kneaded before being applied to a substrate, though much calcium phosphate-based powder is buried in the glaze, part of it exists around the surface layer. Assuming that the ratio of calcium phosphate-based powder existing around the surface layer of the glaze is almost constant, when there is a larger amount of silver to a calcium phosphate-based powder, a larger amount of silver is allowed to exist around the surface layer of the glaze, which improves the antimicrobial property. The other reason is that when a smaller amount of silver is carried on calcium phosphate-based powder, silver is fixed on the calcium phosphate-based powder too firmly to exhibit an antimicrobial effect. On the other hand, when a larger amount of silver is carried on calcium phosphate-based powder, silver is fixed on the calcium phosphate-based powder moderately enough to exhibit an antimicrobial effect. Thus the antimicrobial property is improved.

Experiment 5

Platelike test specimens having a size of 50 mm × 100 mm were prepared with sanitary ware groundwork slurry which was made from silica sand, feldspar, clay and so on. At the same time, the prescribed amount of calcium phosphate-based powder having an average particle size of 2 μm and carrying the prescribed amount of silver was added to a brown glaze, and they were mixed together in water. The mixture was applied to the above platelike test specimens, and they were fired at 1100°C to 1200°C to obtain samples. The samples thus obtained were evaluated with their antimicrobial property. The criteria for antimicrobial evaluation were the same as those used in Experiment 4. The evaluation results are shown in Table 5. Here the compositions of the glaze and the calcium phosphate-based powder were just the same as those used in Experiment 4, except that a different type of pigment was used.

[Table 5]

| Amount of Silver Carried on Calcium Phosphate-based Powder (Wt %) | Amount of Calcium Phosphate-based Powder Mixed in Glaze (Wt %) | Total Amount of Silver Mixed in Glaze (Wt %) | Antimicrobial Property |
|---|---|---|---|
| 5 | 3 | 0.15 | + |
| 5 | 5 | 0.25 | + |
| 10 | 2 | 0.20 | ++ |
| 10 | 2.5 | 0.25 | ++ |
| 15 | 1 | 0.15 | +++ |
| 15 | 2 | 0.30 | +++ |

It is evident from Table 5 that antimicrobial property improves with the increase of silver amount to a calcium phosphate-based powder, and that when the amount of silver carried on calcium phosphate-based powder is 10 weight % or more, the antimicrobial property is evaluated as ++, when the amount of silver carried on calcium phosphate-based powder is 15 weight % or more, the antimicrobial property is evaluated as +++. Thus good results were obtained.

Experiment 6

Platelike test specimens having a size of 50 mm × 100 mm were prepared with sanitary ware groundwork slurry which was made from silica sand, feldspar, clay and so on. At the same time, the calcium phosphate-based powder having the prescribed particle diameter and carrying 10 weight % of silver was added to an ivory glaze to make up 2.5 weight % of the total weight, and they were mixed together in water. The mixture was applied to the above platelike test specimens, and they were fired at 1100°C to 1200°C to obtain samples. The samples thus obtained were evaluated with their antimicrobial property. The criteria for antimicrobial evaluation were the same as those used in Experiment 4. The evaluation results are shown in Table 6. Here the compositions of the glaze and the calcium phosphate-based powder were just the same as those used in Experiment 4, except that a different type of pigment was used.

[Table 6]

| Particle Diameter of Calcium Phosphate-based Powder (µm) | Antimicrobial Property |
|---|---|
| 2 | ++ |
| 6 | +++ |
| 10 | + |

It is evident from Table 6 that when the particle diameter of calcium phosphate-based powder was 2 µm or 6 µm, good results were obtained, as evaluation of ++ and +++ showed. However, when the particle diameter increased to 10 µm, the result became poor. The reason is that calcium phosphate-based powder having a larger particle diameter is apt to settle when the glaze is fusing, which causes the amount of silver existing around the surface layer of the glaze to decrease.

As described above, according to Example 2 of the present invention, in producing antimicrobial members with a glaze layer on its substrate surface, silver is selected as an antimicrobial agent because even a small amount of silver can provide the glaze layer with antimicrobial property, and the percentage of silver added to the glaze layer is controlled to less than 1 weight %. This allows the glaze layer never to show brown or black.

Furthermore, though the percentage of silver added to the glaze layer is as little as less than 1 weight %, since the percentage of silver to the total weight of silver and ceramic powder mixed in a glaze is controlled to 10 weight % or more, the glaze layer can exhibit sufficient antimicrobial property. Particularly, when the percentage of such silver is controlled to 15 weight % or more, even if it is mixed in a glaze which contains a trace of components inhibiting its antimicrobial activity, the glaze can show expected antimicrobial property.

Thus increased percentage of silver to ceramic powder permits decreased percentage of ceramic powder to a glaze, which allows to control changes in color and properties of a glaze layer which undergoes firing. In addition, when the average particle diameter of ceramic powder is controlled to less than 10 $\mu$m, the amount of silver projecting from the surface of a glaze layer is increased; therefore the glaze layer can exhibit sufficient antimicrobial property even if the amount of silver mixed in is small.

**Claims**

1. An antimicrobial member comprising a substrate and a glaze layer which is formed on the surface of said substrate; said glaze layer containing a ceramic powder with silver on it, wherein the percentage of said silver to the total weight of said silver and said ceramic powder is 10 weight % or more, and the percentage of said silver to the weight of said glaze layer is less than 1 weight %.

2. The antimicrobial member according to Claim 1, wherein the average particle diameter of said ceramic powder is less than 10 $\mu$m.

3. An sanitary ware as an antimicrobial member comprising a substrate made of china and porcelain and a glaze layer formed on the surface of said substrate; said glaze containing ceramic powder made of at least one material selected from among the group of phosphate compounds, calcium carbonate, calcium silicate and zinc oxide and with silver on it, wherein the percentage of said silver to the total weight of said silver and said ceramic powder is 10 weight % or more, and the percentage of said silver to the weight of said glaze layer is less than 1 weight %.

4. An antimicrobial surface structure of ceramic comprising a glaze layer which contains a ceramic powder with silver on it, wherein said silver is provided with its tip projecting from said glaze layer.

5. A method of preparing an antimicrobial glaze used for ceramic comprising the steps of;

   preparing a base glaze by way of mixing/grinding water, glaze base material and pigment,
   mixing a heat resistant powder material with an antimicrobial metal on it in said base glaze, and
   mixing a binder in said mixture.

6. The method of preparing an antimicrobial glaze used for ceramic according to Claim 5, wherein the heat resistant powder material with an antimicrobial metal on it is mixed in a portion of said base glaze previously taken out, and the mixture is returned to the rest of said base glaze.

7. The method of preparing an antimicrobial glaze used for ceramic according to Claim 5, wherein the average particle diameter of said heat resistant powder material is within the range of 1 $\mu$m to 15 $\mu$m.

8. The method of preparing an antimicrobial glaze used for ceramic according to Claim 5, wherein the percentage of said antimicrobial metal to said heat resistant powder material is within the range of 0.5 weight % to 25 weight %.

9. The method of preparing an antimicrobial glaze used for ceramic according to Claim 5, wherein the percentage of said heat resistant powder material with said antimicrobial metal on it to the total weight of a dried glaze to which said heat resistant powder material is added is within the range of 0.5 weight % to 10 weight %.

10. A method of preparing an antimicrobial glaze used for ceramic comprising the steps of;

    preparing a base glaze by way of mixing/grinding water, glaze base material and pigment,
    mixing a heat resistant powder material with an antimicrobial metal on it as well as pigment capable of counterbalancing the change in firing color caused by addition of said heat resistant powder material in said base glaze, and
    mixing a binder in said mixture.

11. The method of preparing an antimicrobial glaze used for ceramic according to Claim 10, wherein the pigment mixed in said base glaze so as to counterbalance the change in firing color is the same type of pigment as is a constituent of said base glaze.

12. The method of preparing an antimicrobial glaze used for ceramic according to Claim 10, wherein the pigment which is a constituent of said base glaze makes up 70 % or more of the total pigment mixed in said antimicrobial glaze used for ceramic.

13. The method of preparing an antimicrobial glaze used for ceramic according to Claim 10, wherein said heat resistant powder material with an antimicrobial metal on it as well as said pigment capable of counterbalancing the change in firing color caused by addition of said heat resistant powder material are mixed in a portion of said base glaze previously taken out, and the mixture is returned to the rest of said base glaze.

14. The method of preparing an antimicrobial glaze used for ceramic according to Claim 10, wherein the average particle diameter of said heat resistant powder material is within the range of 1 $\mu$m to 15 $\mu$m.

15. The method of preparing an antimicrobial glaze used for ceramic according to Claim 10, wherein the percentage of said antimicrobial metal to the heat resistant powder material is within the range of 0.5 weight % to 25 weight %.

16. The method of preparing an antimicrobial glaze used for ceramic according to Claim 10, wherein the percentage of said heat resistant powder material with said antimicrobial metal on it to the total weight of a dried glaze to which said heat resistant powder material is mixed is within the range of 0.5 weight % to 10 weight %.

17. A process of producing an antimicrobial china and porcelain comprising the steps of;

preparing an antimicrobial glaze used for ceramic by way of first preparing a base glaze by mixing/grinding water, glaze base material and pigment, secondly mixing a heat resistant powder material with an antimicrobial metal on it in said base glaze, and finally mixing a binder in said mixture,
applying said antimicrobial glaze used for ceramic to a ceramic groundwork, and
firing said glazed groundwork.

18. The process of producing an antimicrobial china and porcelain according to Claim 17,
wherein prior to applying said antimicrobial glaze used for ceramic, a base glaze is prepared by way of mixing/grinding water, glaze base material and pigment, then a binder is mixed in said base glaze, and the mixture is applied to a ceramic groundwork.

19. A process of producing an antimicrobial china and porcelain comprising the steps of;

preparing an antimicrobial glaze used for ceramic by way of first preparing a base glaze by mixing/grinding water, glaze base material and pigment, secondly mixing a heat resistant powder material with an antimicrobial metal on it as well as a pigment capable of counterbalancing the change in firing color caused by the addition of said heat resistant powder material in said base glaze, and finally mixing a binder in said mixture,
applying said antimicrobial glaze used for ceramic to a ceramic groundwork, and
firing said glazed groundwork.

20. The process of producing an antimicrobial china and porcelain according to Claim 19,
wherein prior to applying said antimicrobial glaze used for ceramic, a base glaze is prepared by way of mixing/grinding water, glaze base material and pigment, then a binder is mixed in said base glaze, and the mixture is applied to a ceramic groundwork.

21. An antimicrobial china and porcelain comprising an upper and a lower glaze layers formed on its surface,
said lower layer being a base glaze layer which is a mixture consisting of water, glaze base material and pigment
and said upper layer being an antimicrobial glaze layer which is a mixture consisting of said base glaze and a heat resistant powder material with an antimicrobial metal on it.

22. An antimicrobial china and porcelain comprising an upper and a lower glaze layers formed on its surface;
said lower layer being a base glaze layer which is a mixture consisting of water, glaze base material and pigment
and said upper layer being an antimicrobial glaze layer which is a mixture consisting of said base glaze, a heat resistant powder material with an antimicrobial metal on it and a pigment capable of counterbalancing the change in firing color caused by the addition of said heat resistant powder material.

FIG. 1

FIG. 2

## INTERNATIONAL SEARCH REPORT

| International application No. |
|---|
| PCT/JP96/00221 |

| A. CLASSIFICATION OF SUBJECT MATTER |
|---|
| Int. Cl$^6$ A01N59/16, C03C8/00 |

According to International Patent Classification (IPC) or to both national classification and IPC

| B. FIELDS SEARCHED |
|---|

Minimum documentation searched (classification system followed by classification symbols)

Int. Cl$^6$ A01N59/16, C03C8/00

Documentation searched other than minimum documentation to the extent that such documents are included in the fields searched

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP, 6-340513, A (Sumitomo Cement Co., Ltd.), December 13, 1994 (13. 12. 94), Claim, example, lines 2 to 8, 15 to 18, column 2 & EP, 653161, A1 & WO, 94/27442, A1 | 1 - 4, 21 - 22 |
| A | | 5 - 20 |
| A | JP, 5-201747, A (Sumitomo Cement Co., Ltd.), August 10, 1993 (10. 08. 93)(Family: none) | 1 - 22 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| April 23, 1996 (23. 04. 96) | April 30, 1996 (30. 04. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)